# NOUVEAU FASCICULE DE BREVET EUROPEEN

(11) **EP 3 544 936 B2**
(45) Date de publication et mention de la décision concernant l'opposition: **26.11.2025**
(45) Mention de la délivrance du brevet: 28.04.2021
(21) Numéro de dépôt: 17811647.1
(22) Date de dépôt: 22.11.2017
(51) Int. Cl.: G06K 1/12, C03C 23/00

(54) **PROCEDE D'OBTENTION DE PLAQUES DE VERRE MARQUEES.**
VERFAHREN ZUR HERSTELLUNG VON MARKIERTEN GLASSCHEIBEN
METHOD FOR PRODUCING MARKED GLASS PANELS

(30) Priorité: 24.11.2016 FR 1661449
(43) Date de publication de la demande: 02.10.2019
(73) Titulaire: SAINT-GOBAIN GLASS FRANCE, 92400 Courbevoie (FR)
(72) Inventeur: OZANAM, Cécile, 91120 Palaiseau (FR); GAYOUT, Patrick, 93250 Villemomble (FR)
(74) Mandataire: Saint-Gobain Recherche
(86) Numéro de dépôt international: PCT/FR2017/053198
(87) Numéro de publication internationale: WO 2018/096258

(56) Documents cités:
- EP-A1- 1 939 946
- WO-A1-2007/033445
- WO-A1-2015/121548
- WO-A1-2015/121548
- WO-A1-2015/121549
- WO-A1-2015/121549
- WO-A1-2015/121550
- WO-A1-97/39888
- CA-A1- 3 200 690
- US-A1- 2008 304 525
- US-A1- 2016 371 523
- MOHAMMED H. MODI ET AL.: "Ion irradiation damage on tin side surface ''nuclear instrument and methods Oct.2005 of float glass", PHYSICS RESEARCH SECTION B, vol. 239, pages 383 - 390, XP005091583
- BY DANIEL NIETO ET AL.: "Fluence ablation threshold dependence on tin impurities in commercial soda-lime glass", APPLIED OPTICS, vol. 53, no. 24, 20 August 2014 (2014-08-20), pages 5416 - 5420, XP001591363, DOI: 10.1364/AO.53.005416
- NIETO DANIEL, ET AL: "Single pulse laser ablation threshold of borosilicate, fused silica, sapphire and soda-lime glass for pulse widths of 500 fs, 10 ps,20ns", APPLIED OPTICS, vol. 54, no. 29, 10 October 2015 (2015-10-10), pages 8596 - 8601, XP055895459
- ALEXANDER EGNER: "Jahresbericht 2014", LASER-LABORATORIUM GÖTTINGEN E.V, 1 January 2014 (2014-01-01), pages 3 - 105, XP055895077
- ANONYMOUS: "Product Individualization - The new challenge for glass processing", BORAIDENT GMBH, 1 January 2011 (2011-01-01), pages 1 - 20, XP055895132
- THOMAS RAINER: "Product Individualization - The new challenge for glass processing", GLASS PERFORMANCE DAYS, 1 January 2011 (2011-01-01), pages 443 - 445, XP055895138
- Artikel aus dem veröffentlichten Tagungsband der Konferenz „Glass Performance Days“ im Jahr 2011
- Gosai, Rakesh et al., "Galois field based error detection and correction, auto finding and decoding of two dimensional barcode from an image for automatic label inspection system" Proceedings of the 2009 International Conference on Signals, Systems and Automation, 2010
- Wikipedia auszug Liste der Lasertypen
- Untersuchungsbericht
- Eidesstattliche Versicherung von Herrn Dr. Rainer
- Déclaration René Gy
- “Laser–Materials Interactions” by Michael Bass & Aravinda Kar;
- Glass Marking with CO2 Laser: Experimental Study of the Interaction Laser-Material” by Pascal Deprez et al.
- Ampere A. Tseng et al. - Recent developments on microablation of glass materials using excimer lasers;
- Krystian L. Wlodarczyk et al. - Picosecond laser cutting and drilling of thin flex glass
- Industrial Laser Solutions, Understanding ultraviolet lasers
- Wikipedia-Auszüge „DataMatrix-Code
- Diplomarbeit Kristin Plat, „Untersuchung des Einflusses laserstrahlinduzierter Prozesse verschiedener Markierungsverfahren auf die mechanischen Eigenschaften von Glas“, August 2008
- Präsentation zur Verteidigung der Diplomarbeit
- Auszug website Institut Physik der Uni Halle-Wittenberg
- eV Rainer 2
- eidesstattliche Versicherung von Herrn Prof. Dr. Hans Roggendorf
- MODI MOHAMMED H ET AL: "Ion irradiation damage on tin side surface of float glass", NUCLEAR INSTRUMENTS & METHODS IN PHYSICS RESEARCH. SECTION B: BEAM INTERACTIONS WITH MATERIALS AND ATOMS, vol. 239, no. 4, 15 July 2005 (2005-07-15), pages 383 - 390, XP029236428, ISSN: 0168-583X, DOI: 10.1016/J.NIMB.2005.05.058
- RAINER T ET AL: "FARBIGE INNENBESCHRIFTUNG VON FLOATGLAS DURCH CO2-LASER BESTRAHLUNG", GLASTECHNISCHE TAGUNG. KURZREFERATE, XX, XX, 2 June 1999 (1999-06-02), pages 127 - 130, XP001117571

## Description

L'invention se rapporte au domaine du marquage de codes d'identification sur les plaques de verre.

Il peut être utile de marquer des plaques de verre au moyen de codes d'identification pouvant contenir tout type d'information, par exemple un numéro servant d'identification de la plaque de verre, des informations liées au lieu ou à la date de fabrication etc...

Il est connu de la demande WO2015121549 un procédé de lecture de codes d'identification marqués sur la surface de plaques de verre à proximité de la tranche desdites plaques, dans lequel la lecture se fait par la tranche desdites plaques. Un tel procédé permet une lecture rapide de codes en deux dimensions, par exemple du type « Datamatrix », aussi bien sur des plaques isolées que sur des plaques empilées. Le marquage est par exemple réalisé au moyen d'un laser, qui vient graver la surface du verre.

L'invention a pour but d'améliorer la fiabilité de la lecture du code par la tranche.

A cet effet un objet de l'invention est un procédé d'obtention d'une plaque de verre marquée selon la revendication 1.

Une plaque de verre formée à partir d'une feuille de verre obtenue par flottage sur un bain d'étain fondu est décrite, ladite plaque étant marquée de symboles formant code gravés au moyen d'un rayonnement laser sur une partie de la face ayant été au contact dudit bain d'étain fondu. Cet objet est notamment une plaque de verre obtenue par le procédé selon l'invention.

Un procédé de lecture par la tranche de symboles formant code marqués sur une plaque de verre obtenue par le procédé de l'invention est décrit.

La fabrication de verre flotté comprend traditionnellement les étapes suivantes :
- l'étape de flottage, dans laquelle le verre fondu issu d'un four de fusion est déversé en continu sur un bain d'étain fondu, formant un ruban de verre continu, qui est progressivement solidifié,
- l'étape de recuisson, dans laquelle le ruban de verre solidifié est progressivement refroidi, d'abord dans un four de recuisson appelé « étenderie » puis à l'air libre, afin d'éliminer d'éventuelles contraintes résiduelles susceptibles d'entraîner des casses,
- l'étape de découpe, dans laquelle le ruban est découpé afin de former des plaques de verre de grande taille, typiquement de 6*3 m².

Lors de l'étape de flottage, une face du ruban a été au contact du bain d'étain, et est couramment appelée « face étain » dans la technique ainsi que dans le présent texte. L'autre face, au contact de l'atmosphère, est appelée « face atmosphère ». Les inventeurs ont pu mettre en évidence qu'une gravure laser réalisée sur la face étain de la feuille de verre permettait d'améliorer la qualité de l'image acquise par la tranche des plaques de verre, et donc de faciliter la lecture des codes. Il est ainsi possible de diminuer la taille des codes tout en conservant une bonne qualité de lecture.

Selon l'invention, le procédé de l'invention comprend, préalablement à l'étape de gravure, une étape de flottage sur un bain d'étain fondu afin d'obtenir la feuille de verre, puis une étape de recuisson de ladite feuille de verre, puis une étape de découpe, l'étape de gravure étant réalisée pendant l'étape de recuisson ou entre l'étape de recuisson et l'étape de découpe.

Selon l'invention, la gravure est donc réalisée sur le ruban de verre en mouvement, typiquement un mouvement linéaire. La vitesse de déplacement du ruban est typiquement comprise entre 5 et 24 mètres par minute, selon la tirée du four et l'épaisseur du ruban de verre.

Selon un mode de réalisation non-couvert par les revendications, l'étape de gravure est réalisée après au moins une étape de découpe, sur des plaques de verre de dimensions finies. La gravure est donc réalisée après l'étape de découpe, voire après d'autres étapes de découpe ultérieures, éventuellement réalisées dans d'autres lieux que l'usine de fabrication de verre flotté, par exemple dans une usine de transformation du verre en vitrages pour le bâtiment ou l'automobile. La plaque marquée finale n'a donc pas nécessairement les mêmes dimensions que la plaque sur laquelle la gravure a été réalisée.

Dans ce mode de réalisation non-couvert par les revendications, la gravure peut être réalisée sur une plaque de verre statique, ou sur une plaque de verre en mouvement, typiquement un mouvement linéaire. Il s'agit généralement, dans ce dernier cas, de gravure réalisée lorsque la plaque de verre est en mouvement sur une ligne de transformation, par exemple une ligne de dépôt de couches minces, notamment par pulvérisation cathodique, sur une ligne d'argenture, sur une ligne de fabrication de vitrages feuilletés, de vitrages multiples, de vitrages trempés etc...

Ainsi, selon l'invention, la gravure est réalisée sur la ligne de flottage, la feuille de verre étant alors le ruban de verre flotté. Selon un mode de réalisation non couvert par les revendications, la gravure est réalisée en dehors de la ligne de flottage, la feuille de verre étant alors une plaque de verre.

Le rayonnement laser est de préférence un rayonnement ultraviolet. Par rayonnement ultraviolet, on entend un rayonnement dont la longueur d'onde est comprise dans un domaine allant de 100 à 400 nm. L'utilisation d'un rayonnement ultraviolet permet en effet d'augmenter encore la résolution de la gravure, permettant par exemple d'obtenir des codes parfaitement lisibles par la tranche avec des tailles de symboles inférieures à 180 µm. Les inventeurs ont pu en outre mettre en évidence que les avantages de l'invention en termes de lisibilité du code étaient particulièrement exacerbés dans le cas de l'utilisation d'un rayonnement ultraviolet : la différence de lisibilité entre un marquage face étain et un marquage face atmosphère est en effet encore plus élevée dans le cas d'une gravure par un laser ultraviolet. Il est ainsi possible de graver des codes de petite dimension restant parfaitement lisibles.

Le rayonnement ultraviolet peut notamment être issu d'un laser choisi parmi :
- les lasers à excimère, par exemple un laser à fluorure d'argon (longueur d'onde de 193 nm),
- les lasers à matrice YAG (grenat d'yttrium-aluminium) ou YVO₄, notamment dopés au néodyme ou à l'ytterbium, et couplés à un tripleur ou quadrupleur de fréquence ; un laser Nd :YAG ou Nd :YVO₄ peut ainsi être couplé à un tripleur de fréquence, pour produire un rayonnement laser dont la longueur d'onde est de 355 nm, ou encore à un quadrupleur de fréquence, le rayonnement obtenu ayant alors une longueur d'onde de 266 nm,
- les lasers à fibre dopés à l'ytterbium.

D'autres lasers émettant dans l'ultraviolet sont par exemple des lasers à argon ou des lasers à ions (xénon, krypton), des lasers à colorants, des lasers à électrons libres, des lasers solides dopés au cérium, des diodes laser de nitrure de gallium (GaN).

Le rayonnement laser est de préférence pulsé.

Des lasers à impulsions femtosecondes ou picosecondes sont également utilisables.

De manière connue, le faisceau laser mis en forme peut être focalisé sur la surface de la feuille de verre par une tête de focalisation, cette dernière étant de préférence munie de moyens d'orientation du faisceau, tels que des miroirs montés sur des positionneurs piézoélectriques.

Dans un mode de réalisation non-couvert par les revendications, lorsque la gravure est réalisée postérieurement à une étape de découpe, le procédé de marquage peut comprendre, préalablement à l'étape de gravure, une étape d'identification de la face étain de la feuille de verre. Cette étape d'identification peut notamment être réalisée par irradiation des faces de ladite feuille de verre au moyen d'un rayonnement ultraviolet (à l'aide par exemple d'une lampe émettant à une longueur d'onde de 254 nm) et observation, éventuellement visuelle, de la présence ou non d'un rayonnement de fluorescence, la face étain étant identifiée comme la face émettant un tel rayonnement de fluorescence.

Une plaque de verre comprend deux faces, ou faces principales, reliées entre elles par une tranche. L'épaisseur de la tranche (donc de la plaque de verre) est généralement comprise entre 1 et 19 mm, notamment entre 2 et 6 mm, voire entre 3 et 5 mm. Les faces de la plaque de verre sont généralement de forme rectangulaire. Les dimensions latérales de la plaque de verre peuvent notamment être comprises entre 1 et 7 m, notamment entre 2 et 6 m.

Le verre constituant la feuille ou la plaque de verre présente de préférence une composition de type silico-sodo-calcique, c'est-à-dire une composition comprenant de la silice (SiO₂) comme oxyde formateur et des oxydes de sodium (soude Na₂O) et de calcium (chaux CaO). Cette composition comprend de préférence les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0. |

D'autres types de compositions sont également possibles, telles que des compositions de type borosilicate ou aluminosilicate, qui se prêtent également à une mise en forme par flottage.

Les symboles présentent de préférence une taille moyenne comprise entre 50 et 180 µm, notamment entre 60 et 160 µm, voire entre 70 et 140 µm. Les symboles sont le plus généralement de forme sensiblement circulaire, leur taille moyenne correspondant alors à leur diamètre. La taille moyenne des symboles peut être déterminée notamment à l'aide d'un profilomètre ou par microscopie, par exemple par microscopie optique sur fond clair (*bright field*).

Par « gravure sur la face », on entend généralement que les symboles sont en surface du verre, la zone impactée par la gravure étant à une distance généralement inférieure à 50 µm, voire 40 µm et même 30 µm, de la surface du verre.

Les symboles sont de préférence à au plus 10 mm d'une tranche de la feuille ou de la plaque de verre, de préférence à au plus 7 mm, voire 5 mm et même 4 mm, d'une tranche de la feuille ou de la plaque de verre. La lecture par la tranche s'en trouve ainsi facilitée.

Le code est de préférence un code en deux dimensions, notamment du type Datamatrix ou analogue. A titre d'exemples non limitatifs, on peut citer les codes du type 3-DI code, Aztex Code, Codablock, Code 1, Code 16K, Dot Code, QR Code, ezCode, BeeTagg Big, BeeTagg Landscape, DataMatrix, Maxicode, Snowflake, Verocode, BeeTagg Hexagon, BeeTagg None, ShotCode, MiniCode, Code 49, Datastrip Code, CP Code, ISS SuperCode. Le code peut alternativement être un code à une dimension, tel qu'un code-barre.

Le code en deux dimensions présente de préférence des dimensions d'au plus 5*5 mm², voire 4*4 mm² et même 3*3 mm² ou 2*2 mm².

Le code est généralement un code d'identification ou d'authentification de la plaque de verre. Le code peut par exemple stocker un numéro unique d'identification de la plaque de verre, ledit numéro étant associé dans une base de données à certaines caractéristiques de la plaque. Ces caractéristiques peuvent être par exemple la présence de défauts, leur nature, taille et/ou position, permettant au transformateur d'optimiser la découpe ultérieure de la plaque de verre.

Le procédé de lecture selon l'invention comprend de préférence une étape d'acquisition, au moyen d'une caméra, d'au moins une image par la tranche des plaques de verre, la direction d'observation étant perpendiculaire et inclinée par rapport à ladite tranche de chacune des plaques de verre dont le code doit être lu avec ladite image, et une étape de traitement d'image dans laquelle l'image acquise est traitée par un calculateur programmé de façon à extraire l'information présente dans au moins un code visible sur l'image et devant être lu. De préférence, les plaques de verre sont disposées en une pile lors de la lecture. L'acquisition d'image est de préférence réalisée dans des conditions d'éclairage en champ sombre *(dark field illumination)*.

Les exemples, non-couverts par les revendications, qui suivent illustrent l'effet de la gravure « face étain ».

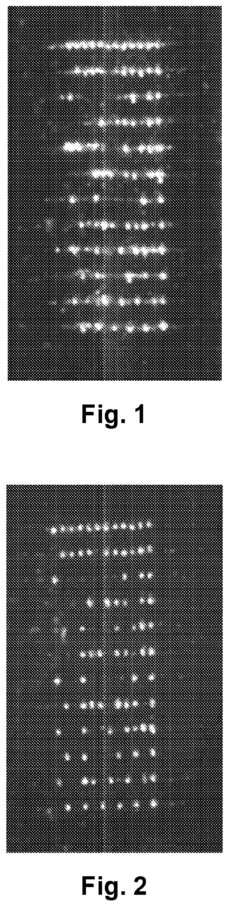

Les Figures 1 et 2 sont des photographies de codes visualisés par la tranche, respectivement pour un exemple 1 et pour un exemple 2.

Une feuille de verre silico-sodo-calcique clair flotté, du type commercialisé par la demanderesse sous la dénomination Planiclear, a été soumise à une irradiation au moyen d'une lampe UV (longueur d'onde de 254 nm), afin d'identifier la face étain de la feuille.

Dans un exemple 2, un code Datamatrix a ensuite été gravé sur la face étain de la feuille, au moyen d'un laser pulsé émettant un rayonnement ultraviolet, plus précisément un laser Nd :YVO4 pompé à l'aide d'une diode laser et associé à un tripleur de fréquence de manière à produire un rayonnement d'une longueur d'onde de 355 nm. Le code, d'une dimension totale de 3*3 mm2 , est formé de points circulaires d'un diamètre allant de 50 à 120 µm, les points les plus proches de la tranche étant situés à une distance de 2 mm de celle-ci.

Dans cet exemple 2, la gravure a été réalisée sur la feuille de verre alors qu'elle était en mouvement rectiligne à une vitesse de 18 mètres par minute

Dans un exemple 1, le même code a été gravé de la même manière, mais sur la face atmosphère de la feuille de verre.

Les codes ont ensuite été lus par la tranche au moyen d'une caméra sous un angle d'environ 30° par rapport à une normale à la tranche.

L'image prise par la caméra dans le cas de l'exemple 1 est représentée en Figure 1. On peut voir que la qualité de l'image est médiocre, les points formant le code étant par endroits difficilement discernables les uns des autres. Il semblerait que cette moindre visibilité des points soit due à la présence de microfissures se propageant entre les points, invisibles lors d'une lecture de face mais diffusant la lumière de manière à affecter la lecture par la tranche. La lecture du code est alors difficile, et peut même entraîner des erreurs de lecture.

L'image prise par la caméra dans le cas de l'exemple 2 est représentée en Figure 2. On voit ici que l'image est de bonne qualité, les points étant bien séparés les uns des autres. La lecture du code est alors grandement facilitée, et le risque d'erreur de lecture minimisé.

On notera en revanche que, vus par la face, les codes de l'exemple 2 et de l'exemple 1 ne présentent pas de différences visibles. A l'œil nu, la gravure semble légèrement plus apparente lorsque la gravure a été réalisée sur la face atmosphère, mais en cas de lecture du code par la face, aucune différence n'est observée.

Des résultats similaires ont été obtenus dans d'autres essais de gravure, réalisés sur des plaques de verre statiques.

## Revendications

1. Procédé d'obtention d'une plaque de verre marquée sur une partie d'une de ses faces de symboles formant code, comprenant une étape de gravure desdits symboles au moyen d'un rayonnement laser sur une feuille de verre obtenue par flottage sur un bain d'étain fondu, ladite gravure étant réalisée sur la face ayant été au contact dudit bain d'étain fondu,
le procédé comprenant, préalablement à l'étape de gravure, une étape de flottage sur un bain d'étain fondu afin d'obtenir ladite feuille de verre, puis une étape de recuisson de ladite feuille de verre, puis une étape de découpe, l'étape de gravure étant réalisée pendant l'étape de recuisson ou entre l'étape de recuisson et l'étape de découpe.

2. Procédé selon la revendication 1, tel que le rayonnement laser est un rayonnement ultraviolet.

3. Procédé selon la revendication précédente, tel que le rayonnement ultraviolet est issu d'un laser choisi parmi :
- les lasers à excimère,
- les lasers à matrice YAG (grenat d'yttrium-aluminium) ou YVO₄, notamment dopés au néodyme ou à l'ytterbium, et couplés à un tripleur ou quadrupleur de fréquence,
- les lasers à fibre dopés à l'ytterbium.

4. Procédé selon l'une des revendications précédentes, tel que les symboles sont à au plus 10 mm d'une tranche de la feuille de verre ou de la plaque de verre, de préférence à au plus 7 mm d'une tranche de la feuille de verre ou de la plaque de verre.

5. Procédé selon l'une des revendications précédentes, tel que les symboles présentent une taille moyenne comprise entre 50 et 180 µm, notamment entre 60 et 160 µm.

6. Procédé selon l'une des revendications précédentes, tel que le code est un code en deux dimensions, notamment du type Datamatrix.

## Patentansprüche

1. Verfahren zur Herstellung einer Glasplatte, die auf einem Teil einer ihrer Seiten mit Symbolen markiert ist, die einen Code bilden, umfassend einen Schritt des Gravierens der Symbole mittels Laserstrahlung auf einer Glasscheibe, die durch Floaten auf einem Bad aus geschmolzenem Zinn erhalten wurde, wobei das Gravieren auf der Seite durchgeführt wird, die mit dem Bad aus geschmolzenem Zinn in Kontakt war, wobei das Verfahren vor dem Schritt des Gravierens einen Schritt des Floatens auf einem Bad aus geschmolzenem Zinn, um die Glasscheibe zu erhalten, dann einen Schritt des Temperns der Glasscheibe, dann einen Schritt des Schneidens umfasst, und wobei der Schritt des Gravierens während des Schritts des Temperns oder zwischen dem Schritt des Temperns und dem Schritt des Schneidens durchgeführt wird.

2. Verfahren nach Anspruch 1, wobei die Laserstrahlung eine ultraviolette Strahlung ist.

3. Verfahren nach dem vorstehenden Anspruch, wobei die ultraviolette Strahlung von einem Laser ausgeht, der ausgewählt ist aus:
- Excimer-Lasern,
- Lasern mit einer Matrix aus YAG (Yttrium-Aluminium-Granat) oder YVO₄, insbesondere dotiert mit Neodym oder Ytterbium und gekoppelt mit einem Frequenzverdreifacher oder -vervierfacher,
- mit Ytterbium dotierten Faserlasern.

4. Verfahren nach einem der vorstehenden Ansprüche, wobei die Symbole höchstens 10 mm von einem Rand der Glasscheibe oder der Glasplatte, vorzugsweise höchstens 7 mm von einem Rand der Glasscheibe oder Glasplatte, entfernt sind.

5. Verfahren nach einem der vorstehenden Ansprüche, wobei die Symbole eine mittlere Größe zwischen 50 und 180 µm, insbesondere zwischen 60 und 160 µm, aufweisen.

6. Verfahren nach einem der vorstehenden Ansprüche, wobei der Code ein zweidimensionaler Code ist, insbesondere vom Typ Datamatrix.

## Claims

1. A method for obtaining a glass plate marked on a portion of one of its faces with code-forming symbols, comprising a stage of etching said symbols by means of laser radiation on a glass sheet obtained by floating on a bath of molten tin, said etching being carried out on the face which has been in contact with said bath of molten tin,
the method comprising, prior to the etching stage, a stage of floating on a bath of molten tin in order to obtain said glass sheet, followed by a stage of annealing said glass sheet, followed by a cutting stage, the etching stage being carried out during the annealing stage or between the annealing stage and the cutting stage.

2. The method as claimed in claim 1, such that the laser radiation is ultraviolet radiation.

3. The method as claimed in the preceding claim, such that the ultraviolet radiation results from a laser chosen from:
- excimer lasers,
- lasers comprising a YAG (yttrium aluminum garnet) or YVO₄ matrix, in particular doped with neodymium or with ytterbium and coupled to a frequency tripler or quadrupler,
- fiber lasers doped with ytterbium.

4. The method as claimed in one of the preceding claims, such that the symbols are at at most 10 mm from an edge face of the glass sheet or of the glass plate, preferably at at most 7 mm from an edge face of the glass sheet or of the glass plate.

5. The method as claimed in one of the preceding claims, such that the symbols exhibit a mean size of between 50 and 180 µm, in particular between 60 and 160 µm.

6. The method as claimed in one of the preceding claims, such that the code is a two-dimensional code, in particular of the Datamatrix type.
